# EUROPEAN PATENT APPLICATION

(11) **EP 4 775 386 A1**
(43) Date of publication of application: **15.07.2026**
(21) Application number: 25211612.4
(22) Date of filing: 28.10.2025
(51) Int. Cl.: B30B 11/08, B30B 15/32

(54) **ROTARY COMPRESSION MOLDING MACHINE**

(30) Priority: 08.01.2025 JP 2025002998
(71) Applicant: Kikusui Seisakusho Ltd., Nakagyo-ku Kyoto-shi Kyoto 604-8483 (JP)
(72) Inventor: FUJII, Yasushi, Kyoto-shi, 604-8483 (JP)
(74) Representative: TBK

(57) **Abstract**

In a rotary compression molding machine (A), a guide member (16) configured to scrape and guide a molded product (P) to a molded product chute (19) includes a base (171) extending such that not a base end side close to the molded product chute (19) but a tip end side is away from the molded product chute (19) and intersecting with a rotation trajectory of a die bore (4) of a die table (31), and a pick-up body (172) supported by the base (171), including an inclined surface (1721) inclined with respect to the upper surface of the die table (31), and inserted from below onto the molded product (P) pushed out of the die bore (4) of the die table (31) by a lower punch (6).

## Description

### Field of the Invention

The invention relates to a rotary compression molding machine configured to compress a powdery material and mold a tablet, a food product, or the like.

### Background of the Invention

There has been known a rotary compression molding machine comprising a turret including a die table including an outer circumferential portion including a large number of die bores, and an upper punch and a lower punch slidably retained above and below each of the die bores, and configured to horizontally rotate the die table and the punches together and fill each of the die bores with a powdery material when the die bore passes just below a feeder to compression mold (or tablet) the powdery material in the die bore when the pair of upper and lower punches passes between an upper roll and a lower roll.

The shape of the molded product corresponds to the shape of a die, that is, the punch tips of the upper and lower punches and the inner periphery of the die. It is also possible to produce a spherical molded product by using a dedicated die (see, for example, JP-A-2012-148321). Examples of the spherical molded product include a spherical tablet of a pharmaceutical product, an insect repellent, cosmetics such as a deodorant, sweets such as a hard candy and a soft candy, and the like.

In the rotary compression molding machine, in order to take out the compression molded product, the upper punch lifts and is removed to the outside of the die bore and retracts from the die table, and the lower punch ascends to push up the molded product from the die bore. The molded product is then scraped off and guided to a molded product chute by a guide member (or a scraper) placed at a predetermined position.

In the spherical molded product, the tip end surface of the punch tip of the lower punch may have a deep recess (cup) (if the punch tip of the lower punch protrudes beyond the upper surface of the die table, the punch tip may collide with the guide member, and for this reason, it is difficult to completely expose the entire molded product on the die table), and simply scraping the molded product with the guide member may cause chipping or cracking in the molded product or collapse of the molded product.

It is also conceivable that the lower punch has a double structure (see, for example, "Compression Molding Technique for Powdery Material", first edition edited by the Society of Powder Technology, Japan Division of Particulate Design and Preparations, Nikkan Kogyo Shimbun, Ltd., June 30, 1998, p. 303 to 304, and JP-A-2017-159304) including a hollow outer punch with a shaft hole and a center punch (inner punch) inserted into the shaft hole so that the entire molded product can be exposed on the die table before being scraped by the guide member, and the molded product is pushed upward from the die bore by the center punch moving independently of the outer punch to be exposed on the die table. However, the structure of the guide rail that individually moves the outer punch and the center punch up and down is also very complicated.

### Summary of the Invention

An object of the invention is to provide a rotary compression molding machine capable of appropriately collecting a compression molded product with a guide member without causing damage to the molded product.

In the invention, there is provided a rotary compression molding machine in which die bores penetrating a die table of a turret are provided, an upper punch and a lower punch are slidably held above and below each die bore, the turret is horizontally rotated to fill the die bore with a powdery material from a feeder when the die bore passes below the feeder, and a pair of the upper punch and the lower punch compresses the powdery material filled in the die bore when such a pair passes between an upper roll and a lower roll to mold and produce a molded product. The rotary compression molding machine includes a guide member configured to scrape and guide the molded product to a molded product chute, and the guide member has a base extending such that not a base end side close to the molded product chute but a tip end side is away from the molded product chute and intersecting with a rotation trajectory of the die bore of the die table, and a pick-up body supported by the base, including an inclined surface inclined with respect to the upper surface of the die table, and inserted from below onto the molded product pushed out of the die bore of the die table by the lower punch. A powdery material is an aggregate of minute solids and conceptually includes an aggregate of particles such as so-called granules and an aggregate of powder smaller than such particles. A mixture of a plurality of powdery materials also corresponds to powdery materials.

The guide member of the compression molding machine according to the invention picks up, from below, and takes out the molded product pushed out of the die bore of the die table. This can significantly reduce a possibility of causing damage to the molded product. Such a configuration is particularly suitable for molding and taking out a molded product including a substantially spherical shape.

In addition, if a portion of the base of the guide member on the tip end side of the pick-up body contacts the molded product pushed out of the die bore of the die table by the lower punch and not completely exposed upward from the upper surface of the die table, and the pick-up body subsequently contacts the molded product, the molded product exposed from the die bore on the die table to some extent or more (in particular, the half or more) is slightly displaced so as to come into contact with the tip-end-side portion of the base and be peeled off from the die bore and the lower punch, and then is picked up by the pick-up body. The impact instantaneously applied to the molded product can be reduced, and a concern of causing the damage to the molded product can be eliminated.

If the side edge of the portion of the base of the guide member on the tip end side of the pick-up body has a non-linear shape bulging toward the die bore from which the molded product is about to be pushed out by the lower punch, the molded product flowing toward the guide member can be discharged even if the molded product once contacts the tip-end-side portion of the base of the guide member. That is, an increase in the force applied from the base of the guide member to the molded product becomes gentle.

If the intersection angle of the base of the guide member with respect to the rotation trajectory of the die bore of the die table can be variably adjusted, the magnitude of the force applied to the molded product immediately after the molded product contacts the tip-end-side portion of the base of the guide member can be finely adjusted. The molded product partially exposed on the die table is prevented from being subjected to such a large shear force so as to cut the molded product by the die bore of the die table and the tip-end-side portion of the base of the guide member. This is effective for preventing the damage to the completed molded product.

If the position of the pick-up body of the guide member relative to the base can be variably adjusted, the timing of picking up the molded product flowing toward the guide member can be finely adjusted. This is also effective for preventing the damage to the molded product. The molded product taken out of the die bore is appropriately guided out of the rotational orbit of the die bore and the lower punch so as not to collide with the punch tip of the upward-moving lower punch.

### Effects of the Invention

According to the invention, in the rotary compression molding machine, the guide member can appropriately collect the compression molded product without causing the damage to the molded product.

### Brief description of the drawings

Fig. 1 is a side sectional view of a rotary compression molding machine according to an embodiment of the invention;
Fig. 2 is a plan view showing a die table of a turret and a guide member in the molding machine of the embodiment;
Fig. 3 is a developed view showing the flow of a process of producing a molded product by the molding machine according to the embodiment and vertical motion of punches along with rotation of the turret;
Fig. 4 is an enlarged plan view showing the guide member on the die table of the turret in the molding machine according to the embodiment and the periphery thereof;
Fig. 5 is a side view of the guide member of the molding machine according to the embodiment;
Fig. 6 is a perspective view of the guide member of the molding machine according to the embodiment;
Fig. 7 is an exploded perspective view of the guide member of the molding machine according to the embodiment;
Fig. 8 is an end view showing the state of molding of a spherical molded product by the molding machine of the embodiment;
Fig. 9 is an end view showing the state of lifting and scraping of the spherical molded product by the molding machine of the embodiment; and
Fig. 10 is an end view showing the state of scraping (in particular, pick-up) of the spherical molded product by the molding machine of the embodiment.

### Description of the preferred embodiments

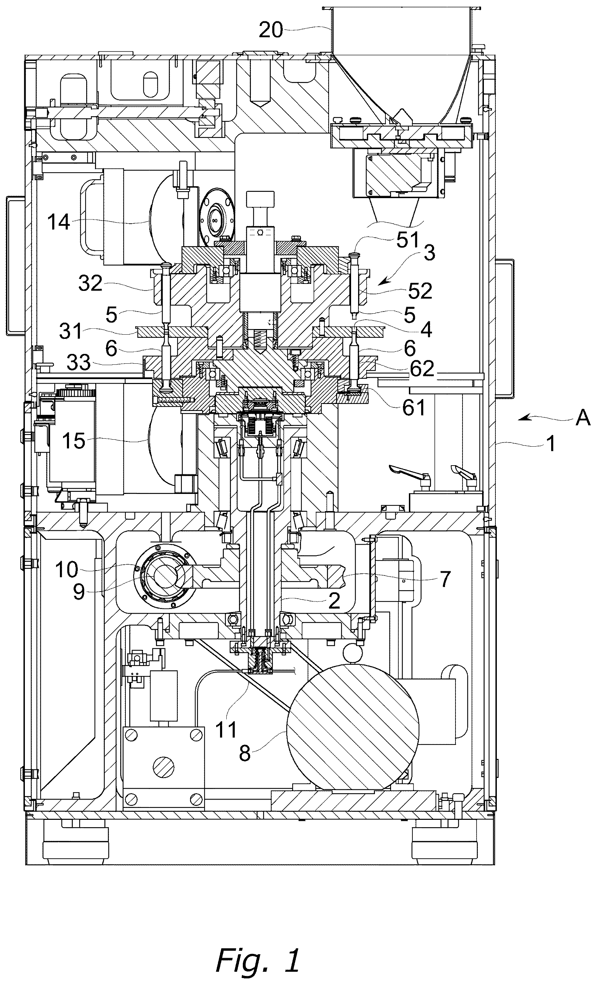

An embodiment of the invention will now be described with reference to the drawings. Initially described is an overview of an entire rotary compression molding machine (hereinafter, referred to as a "molding machine") A according to the embodiment, which is used in production of a molded product P. As shown in Fig. 1, the molding machine A includes a frame 1 accommodating an upright shaft 2 functioning as a rotary shaft and a turret 3 attached to an upper portion of the upright shaft 2.

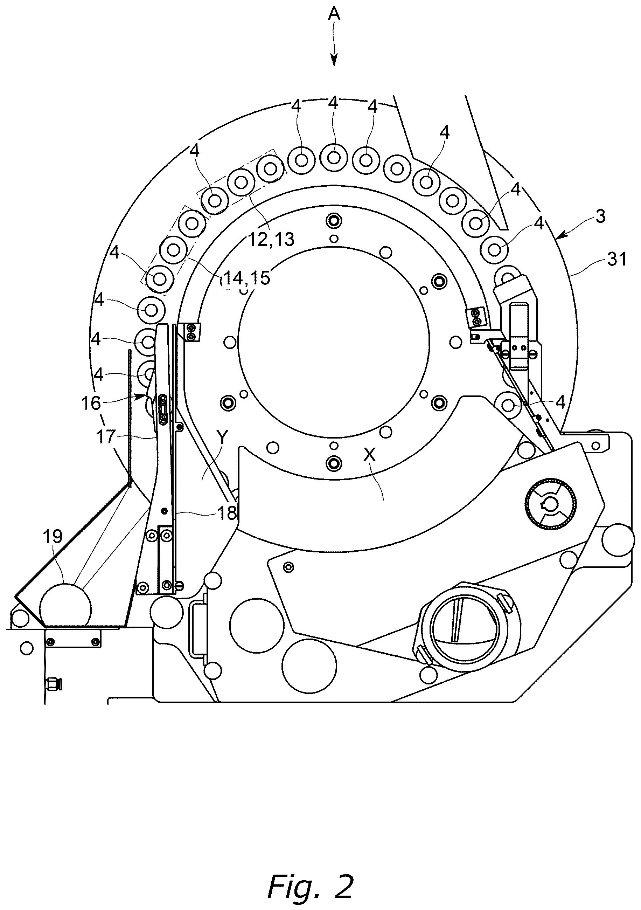

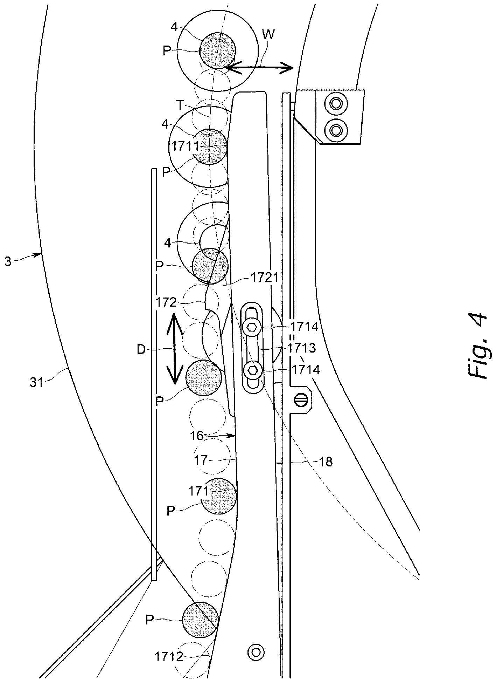

The turret 3 horizontally rotates about the upright shaft 2, more specifically, spins. The turret 3 includes a die table (die disc) 31, an upper punch retaining portion 32, and a lower punch retaining portion 33. As shown in Figs. 2 and 4, the die table 31 has a substantially circular disc shape, and has a plurality of die bores 4 that is disposed in an outer circumferential portion and is aligned in a rotation direction at predetermined intervals. Here, the die table 31 and the turret 3 including a punch holding portion 32 as well as punches 5, 6 rotate counterclockwise in plan view. The die bores 4 vertically penetrate the die table 31. The die table 31 may alternatively be divided into a plurality of plates. Instead of the die bores 4 formed by directly drilling the die table 31 itself, the die table 31 may alternatively have a plurality of die members separated from the die table 31 and detachably attached to the die table 31. In this case, each of the die members has a die bore penetrating vertically.

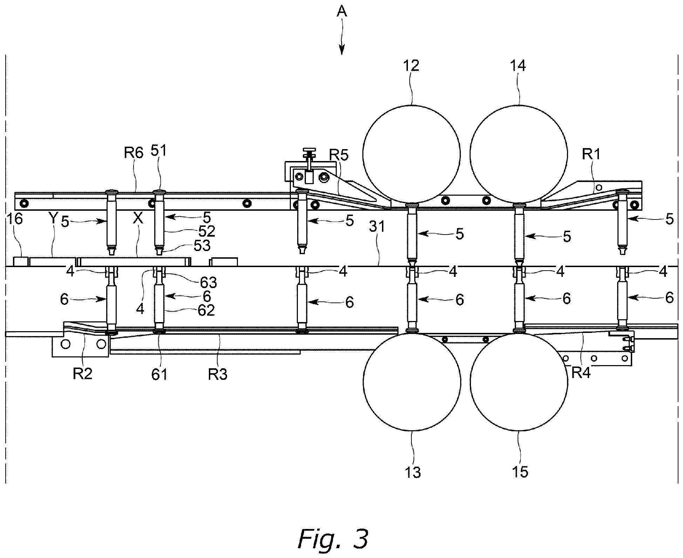

As shown in Figs. 1 and 3, each die bore 4 has an upper punch 5 and a lower punch 6 disposed above and below the die bore 4. The upper punch 5 and the lower punch 6 are retained by the upper punch retaining portion 32 and the lower punch retaining portion 33 so as to be independently slidable vertically with respect to a corresponding one of the die bores 4. The upper punch 5 has a punch tip 53 which enters and exits a corresponding one of the die bores 4. The lower punch 6 has a punch tip 63 kept inserted in a corresponding one of the die bores 4. The upper punch 5 and the lower punch 6 horizontally rotate, more specifically revolve, about the upright shaft 2 along with the turret 3 and a corresponding one of the die bores 4.

The upright shaft 2 has a lower end to which a worm wheel 7 is attached. The worm wheel 7 meshes with a worm gear 10. The worm gear 10 is fixed to a gear shaft 9 to be driven by a motor 8. Drive power outputted from the motor 8 is transmitted to the gear shaft 9 through a belt 11, so as to drive to rotate the turret 3 and the punches 5, 6 coupled to the upright shaft 2 through the worm gear 10 and the worm wheel 7.

A powdery material as a material for the compression molded product P is injected from a powdery material feeding device (not shown) to a hopper (or a buffer tank) 20, and is fed from the hopper 20 to a feeder X which is a filling device. The feeder X is positioned on the outer circumferential portion of the rotating die table 31, particularly, just above a rotational orbit of the die bores 4. The die table 31 rotating along with the turret 3 causes the die bores 4 to be displaced relatively to the feeder X. The feeder X fills the die bore 4 passing just below the feeder X with the powdery material. As the feeder X mounted on the molding machine A, an agitated feeder incorporating a rotatable agitating rotor and pouring the powdery material into the die bores 4 while stirring the powdery material is mainly used, but a gravity feeder incorporating no agitating rotor may be employed.

As shown in Figs. 2 and 3, a preliminary compression upper roll 12, a preliminary compression lower roll 13, a substantial compression upper roll 14, and a substantial compression lower roll 15 are present on revolution orbits of the punches 5, 6 about the upright shaft 2. The preliminary compression upper roll 12 and the preliminary compression lower roll 13 are paired to vertically sandwich the punches 5, 6, and the substantial compression upper roll 14 and the substantial compression lower roll 15 are paired to vertically sandwich the punches 5, 6. The preliminary compression upper roll 12 and the preliminary compression lower roll 13 as well as the substantial compression upper roll 14 and the substantial compression lower roll 15 bias both upper and lower punches 5, 6 to bring the upper and lower punches 5, 6 closer to each other, so that the tip end surfaces of the punch tips 53, 63 compress from above and below the powdery material filled in the die bores 4.

The upper and lower punches 5, 6 have heads 51, 61 pressed by the rolls 12, 13, 14, 15, and trunks 52, 62 smaller in diameter than the heads 51, 61. The upper punch retaining portion 32 of the turret 3 vertically slidably retains the trunks 52 of the upper punches 5, whereas the lower punch retaining portion 33 vertically slidably retains the trunks 62 of the lower punches 6. Tip end portions 53, 63 of the trunks 52, 62 are thinner than other portions and have diameters substantially equal to the inner diameter of the die bores 4 so as to be inserted into the die bores 4. The punches 5, 6 revolve to bring the rolls 12, 13, 14, 15 closer to the heads 51, 61 of the punches 5, 6. The rolls 12, 13, 14, 15 come into contact with the heads 51, 61 to step thereonto. The rolls 12, 13, 14, 15 further press the upper punches 5 downward and press the lower punches 6 upward. While the rolls 12, 13, 14, 15 are in contact with flat surfaces of the punches 5, 6, the punches 5, 6 keep applying a constant pressure to the powdery material in the corresponding die bores 4.

There is a take-out position at which the completed molded product P is taken out, in a downstream portion ahead, in a rotation direction of the turret 3 and the punches 5, 6, of a position pressed by the substantial compression upper roll 14 and the substantial compression lower roll 15. As shown in Figs. 2 to 4, a guide member (or a scraper) 16 is fixed and placed at the take-out position. The guide member 16 will be described in detail later.

Vertical motion of the upper punch 5 and the lower punch 6 is caused by cam rails R1, R2, R3, R4, R5, R6. The rails R1, R2, R3, R4, R5, R6 extend in the rotation direction of the turret 3 and the punches 5 and 6, and are engaged with the heads 51, 61 of the punches 5, 6 to guide and vertically move the punches 5, 6.

As shown in Fig. 3, the head 51 of each of the upper punches 5 has a rotational orbit including the ascending rail (ascending cam) R1 configured to lift the upper punch 5 upward at a position upstream of the guide member 17 and extract the punch tip 53 from the die bore 4, and the descending rail (descending cam) R5 configured to push the upper punch 5 downward at a position upstream of the rolls 12, 14 and insert the punch tip 53 into the die bore 4 to be ready for later compression of the powdery material.

The head 61 of each of the lower punches 6 has a rotational orbit including the push-up rail R4 configured to lift the lower punch 6 upward at a position upstream of the guide member 17 to allow the punch tip 63 to be substantially as high as the upper surface of the die table 31, the reducer R2 configured to pull the lower punch 6 downward at a position upstream of or adjacent to the feeder X to set the volume of the die bore 4 above the punch tip 63 to correspond to the quantity of the powdery material as a constituent material for the molded product P, and the quantity control rail R3 configured to slightly lift the lower punch 6 upward at a position downstream of the feeder X to finely adjust the quantity of the powdery material to be filled in the die bore 4. The quantity control rail R3 has a latter half shaped to slightly pull the lower punch 6 downward to prevent the powdery material having been adjusted in quantity and filled in the die bore 4 from spilling from the die bore 4 due to centripetal force or the like.

An exemplary process of producing the molded product P will be described roughly. As shown in Fig. 3, the lower punch 6 initially descends and a spray device Y sprays the lubricant toward the inner circumferential surface of the die bore 4 into which the punch tip 63 of the lower punch 6 is inserted, the upper end surface of the punch tip 63 of the lower punch 6 (cup), and the lower end surface of the punch tip 53 of the upper punch 5 (cup). The feeder X fills, with the powdery material, the die bore 4 into which the punch tip 63 of the lower punch 6 is inserted. The lower punch 6 ascends and the powdery material overflowing the die bore 4 is leveled such that the die bore 4 is filled with a required quantity of the powdery material.

The upper punch 5 then descends, and the preliminary compression upper roll 12 and the preliminary compression lower roll 13 press the head 51 of the upper punch 5 and the head 61 of the lower punch 6 such that the punch tips 53, 63 of the punches 5, 6 preliminarily compress the powdery material in the die bore 4. The substantial compression upper roll 14 and the substantial compression lower roll 15 subsequently press the head 51 of the upper punch 5 and the head 61 of the lower punch 6, such that the punch tips 53, 63 of the punches 5, 6 substantially compress the powdery material in the die bore 4.

At a position downstream of the substantial compression rolls 14, 15 in the rotation direction of the turret 3, the punch tip 63 of the lower punch 6 ascends until substantially reaching the level of the vicinity of the upper end of the die bore 4, i.e. the upper surface of the die table 31, and pushes the molded product P out of the die bore 4 onto the die table 31. The molded product P is brought into contact with and is scraped by the guide member 16 at a product take-out position due to rotation of the turret 3, is guided along the guide member 16, and moves toward a molded product chute 19. Finally, the molded product P falls from the molded product chute 19, and is discharged to the outside of the molding machine A.

Hereinafter, the guide member 16 disposed at the product take-out position in the molding machine A of the embodiment will be supplementally described. As shown in Figs. 4 to 7, the guide member 16 is configured such that a guide member body 17 comprising a base 171 and a pick-up body 172 as elements is supported by a guide member support 18, and the guide member support 18 is fixed to a stationary member other than the turret 3 of the molding machine A.

The base 171 of the guide member 16 is a rod-shaped member facing the molded product chute 19 on a base end side (lower side in Figs. 2 and 4) and extending away from the molded product chute 19 on a tip end side (upper side in Figs. 2 and 4). The base 171 intersects with a rotation trajectory T of the die bore 4 provided in the die table 31. The pick-up body 172 is provided in the middle between a tip-end-side portion 1711 and a base-end-side portion 1712 of the base 171.

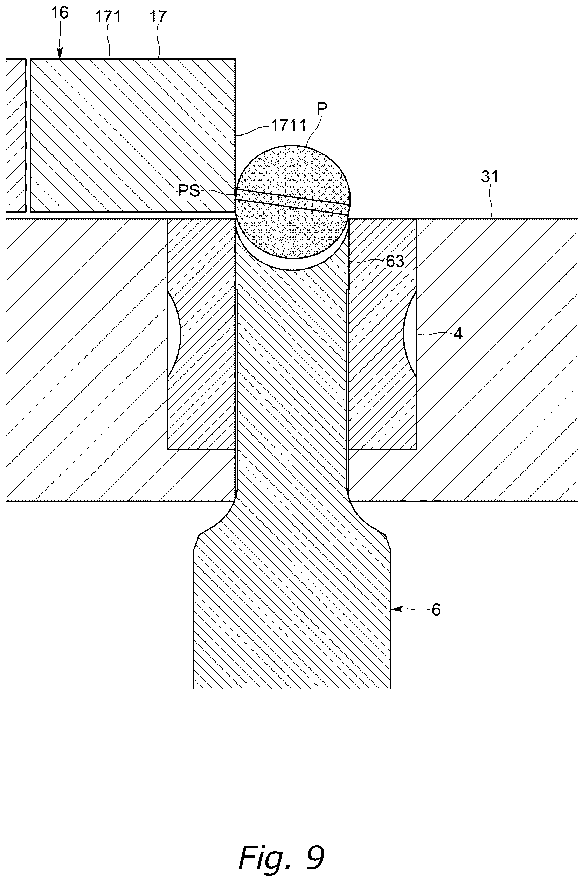

Of the tip end portion 1711 of the base 171, a side edge (left side edge in Fig. 4) on a side where the die bore 4 and the molded product P approach as the die table 31 rotates has a non-linear shape slightly bulging toward the die bore 4 in plan view. As shown in Fig. 9, the side edge of the tip end portion 1711 facing the molded product P is an end surface standing substantially perpendicularly to the upper surface of the die table 31, that is, standing substantially parallel to the axial direction (vertical direction in which the punches 5, 6 move) of the die bore 4.

In a plan view shown in Fig. 4, the side edge of the tip end portion 1711 of the base 171 has a curved surface shape which initially contacts the molded product P pushed upward from the die bore 4 and bulges outward (leftward in Fig. 4) along the radial direction (direction orthogonal to the rotation direction) as viewed from the center of horizontal rotation of the die table 31 and the die bore 4. The side edge of the base 171 closer to the tip end side (farther from the molded product chute 19) than such a position is retracted inward (rightward in Fig. 4) along the radial direction, and does not contact the molded product P pushed out of the die bore 4. The side edge of the base 171 closer to the base end side (closer to the molded product chute 19) than such a position is slightly retracted inward along the radial direction, and is substantially parallel to the rotation trajectory T of the die bore 4 or close to such a parallel state. With such a shape, the impact applied to the molded product P when the molded product P comes into contact with the base 171 of the guide member 16 is reduced, and the magnitude of the force instantaneously acting on the molded product P is reduced.

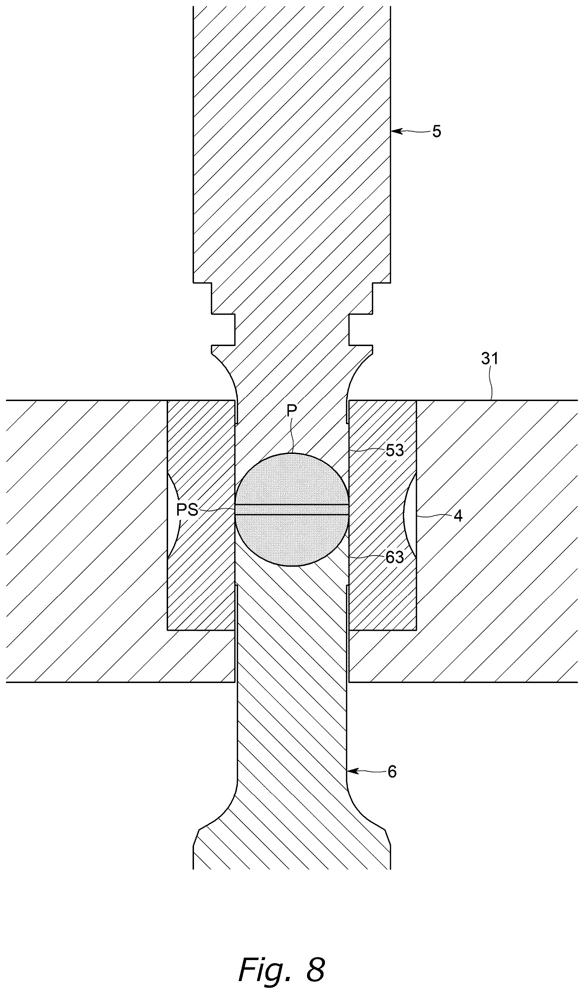

In the embodiment, the substantially spherical molded product P is manufactured by the molding machine A. As shown in Fig. 8, the tip end surface of the punch tip 53 of the upper punch 5 has a substantially hemispherical shape opened downward, and the tip end surface of the punch tip 63 of the lower punch 6 has a substantially hemispherical shape opened upward. The powdery material filled in the die bore 4 is then surrounded and compressed between the tip end surfaces of the punches 5, 6. The punch tip 53 of the upper punch 5 and the punch tip 63 of the lower punch 6 should not collide with each other during compression molding. For this reason, a side band portion PS corresponding to a gap between the tip end of the punch tip 53 of the upper punch 5 and the tip end of the punch tip 63 of the lower punch 6 is formed between an upper portion and a lower portion of the molded product P molded in the die bore 4.

As shown in Fig. 9, the entire molded product P is not exposed above the upper surface of the die table 31 even if the lower punch 6 moves upward to push the molded product P out of the die bore 4 at the take-out position of the molded product P. The lower portion of the molded product P is still accommodated in the die bore 4, and is located lower than the upper surface of the die table 31. In this state, the side end surface of the tip end portion 1711 of the base 171 of the guide member 16 comes into contact with the side band portion PS of the molded product P transferred along with rotation of the die table 31. The molded product P is then pushed by the bulging portion of the tip end portion 1711 of the base 171 to be displaced outward (leftward in Fig. 4, rightward in Fig. 9) in the radial direction of the die table 31 from the die bore 4. At the same time, the molded product P lifts so as to be peeled off from the punch tip 63 of the lower punch 6.

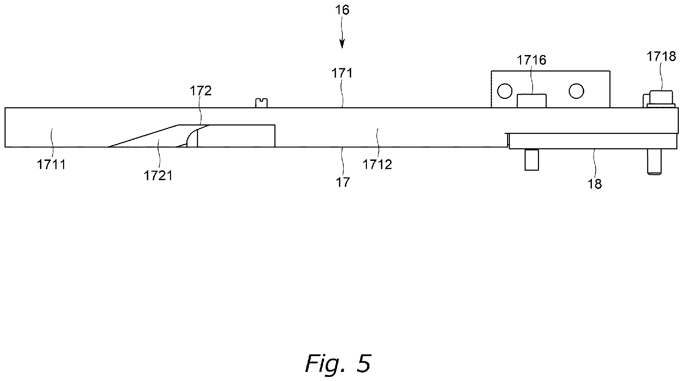

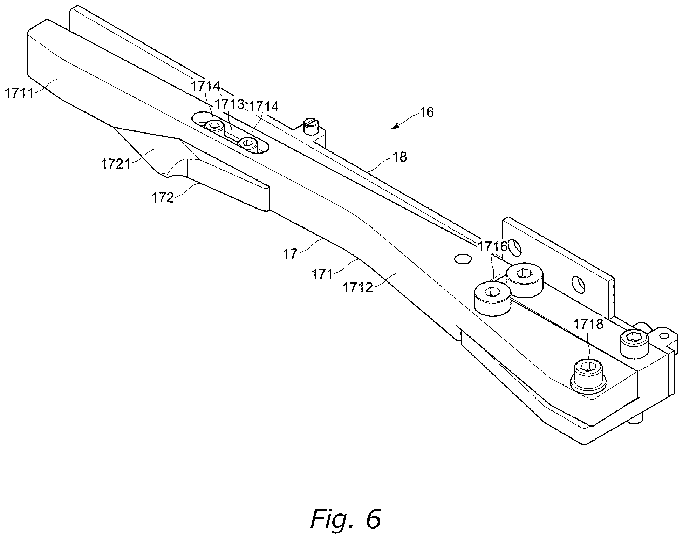

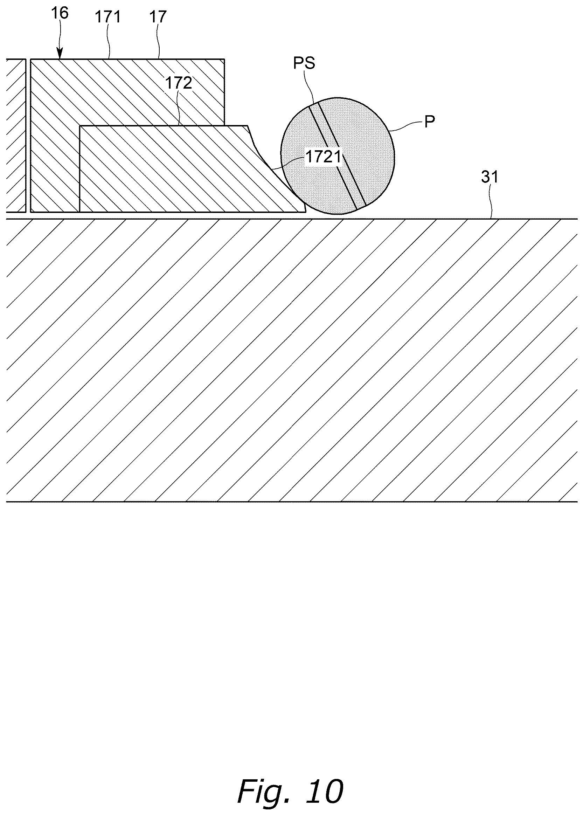

The pick-up body 172 of the guide member 16 picks up the molded product P lifted as described above. The pick-up body 172 has an inclined surface 1721 inclined in non-parallel to the upper surface of the die table 31. As shown in Figs. 4, 6, and 7, a side edge of the inclined surface 1721 of the pick-up body 172, that is, an outer edge (left side edge in Fig. 4) in the radial direction of the die table 31 gradually protrudes outward from the tip end side (upper side in Fig. 4) toward the base end side (lower side in Fig. 4) of the base 171 of the guide member 16. That is, the inclined surface 1721 gradually expands outward from the tip end side toward the base end side of the base 171 in plan view. In addition, as shown in Figs. 5 to 7, the inclined surface 1721 gradually increases in height from the tip end side (left side in Fig. 5) toward the base end side (right side in Fig. 5) of the base 171. Further, as shown in Figs. 6, 7, and 10, the inclined surface 1721 gradually increases in height from the outer side (left side in Fig. 4, right side in Fig. 10) in the radial direction of the die table 31 toward the inner side (right side in Fig. 4, left side in Fig. 10) close to the base 171.

The molded product P lifted in contact with the tip end portion 1711 of the base 171 of the guide member 16 at the take-out position of the molded product P moves toward the pick-up body 172 as shown in Fig. 4. Then, as shown in Fig. 10, the molded product P moves over the inclined surface 1721 of the pick-up body 172. As a result, as shown in Fig. 4, the molded product P is pushed outward along the radial direction of the die table 31 by the inclined surface 1721 of the pick-up body 172, is separated from the rotation trajectory T of the die bore 4, and rolls on the die table 31.

The molded product P is thus brought into contact with the side edge of the base-end-side portion 1712 of the base 171 of the guide member 16 with respect to the pick-up body 172 again, travels toward the molded product chute 19 along the base end portion 1712, falls into the molded product chute 19, and is finally discharged to the outside of the molding machine A.

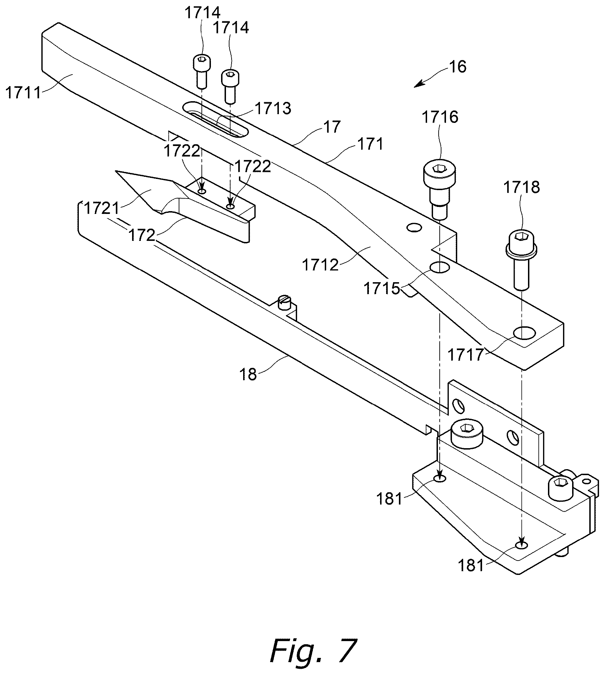

As indicated by an arrow W in Fig. 4, the guide member body 17, that is, the base 171 and the pick-up body 172 supported by the base 171 can adjust an intersection angle with respect to the rotation trajectory T of the die bore 4. As shown in Figs. 6 and 7, a plurality of through-holes 1715, 1717 vertically penetrating the guide member body 17 is formed on the base end side of the guide member body 17. A plurality of internal threaded holes 181 is formed corresponding to the through-holes 1715, 1717 in the guide member support 18 that supports the base end side of the guide member body 17 from below. A stepped bolt 1716 is inserted into one through-hole 1715 from above, and an external thread of a shaft thereof is screwed into one internal threaded hole 181. The stepped bolt 1716 serves as a rotary shaft for horizontally swinging the guide member body 17 relative to the guide member support 18. A bolt 1718 with a washer is inserted into the other through-hole 1717 from above, and an external thread of a shaft thereof is screwed and fastened into the other internal threaded hole 181. The bolt 1718 serves as a fastener that immovably fixes the guide member body 17 to the guide member support 18. The orientation of the guide member body 17 along the arrow W in Fig. 4 is slightly corrected in accordance with the diameter of the molded product P, that is, the inner diameter of the die bore 4 and the outer diameters of the punch tips 53, 63 of the punches 5, 6.

As indicated by an arrow D in Fig. 4, the position of the pick-up body 172 of the guide member body 17 relative to the base 171 can be adjusted along the direction of extension of the base 171. As shown in Figs. 6 and 7, a long hole 1713 vertically penetrating the base 171 is formed in an intermediate portion of the base 171. In addition, a plurality of internal threaded holes 1722 is formed in a portion of the pick-up body 172 other than the inclined surface 1721 and a portion of the pick-up body 172 contacting the intermediate portion of the base 171 from below. A plurality of bolts 1714 is inserted into the long hole 1713 from above, and external threads of shafts thereof are screwed and fastened into the internal threaded holes 1722. The pick-up body 172 can be displaced relative to the base 171 along a direction in which the long hole 1713 extends. The plurality of bolts 1714 serves as fasteners for immovably fixing the pick-up body 172 to the base 171. The position of the pick-up body 172 in the front-rear direction along the arrow D in Fig. 4 is slightly corrected in accordance with the diameter of the molded product P, that is, the inner diameter of the die bore 4 and the outer diameters of the punch tips 53, 63 of the punches 5, 6.

According to the embodiment, there is provided the rotary compression molding machine A in which the die bores 4 penetrating the die table 31 of the turret 3 are provided, the upper punch 5 and the lower punch 6 are slidably held above and below each die bore 4, the turret 3 is horizontally rotated to fill the die bore 4 with the powdery material from the feeder X when the die bore 4 passes below the feeder X, and the pair of upper punch 5 and lower punch 6 compresses the powdery material filled in the die bore 4 when such a pair passes between the upper rolls 12, 14 and the lower rolls 13, 15 to mold and produce the molded product P. The rotary compression molding machine A includes the guide member 16 configured to scrape and guide the molded product P to the molded product chute 19, and the guide member 16 has the base 171 extending such that not the base end side close to the molded product chute 19 but the tip end side is away from the molded product chute 19 and intersecting with the rotation trajectory T of the die bore 4 of the die table 31, and the pick-up body 172 supported by the base 171, including the inclined surface 1721 inclined with respect to the upper surface of the die table 31, and inserted from below onto the molded product P pushed out of the die bore 4 of the die table 31 by the lower punch 6.

In the embodiment, at the take-out position of the molded product P in the molding machine A, the molded product P pushed out of the die bore 4 of the die table 31 is not scraped only by colliding the molded product P with the base 171 of the guide member 16, but is picked up from below and taken out by the pick-up body 172. According to the embodiment, it is possible to reduce a large force from being instantaneously applied to the molded product P and to significantly reduce the possibility of damage to the molded product P. Such a configuration is particularly suitable for producing the molded product P including the substantially spherical shape by the molding machine A.

In the embodiment, the portion 1711 of the base 171 of the guide member 16 on the tip end side of the pick-up body 172 comes into contact with the molded product P pushed out of the die bore 4 of the die table 31 by the lower punch 6 and not completely exposed upward from the upper surface of the die table 31, and then the pick-up body 172 comes into contact with the molded product P. The molded product P exposed from the die bore 4 on the die table 31 to some extent or more (in particular, the half or more) is slightly displaced so as to be peeled off from the die bore 4 and the lower punch 6 by contact with the tip end portion 1711 of the base 171, and then picked up by the pick-up body 172. As a result, the impact instantaneously applied to the molded product P can be reduced, and a concern of causing the damage to the molded product P can be eliminated.

If the side edge of the portion 1711 of the base 171 of the guide member 16 on the tip end side of the pick-up body 172 has the non-linear shape bulging toward the die bore 4 from which the molded product P is about to be pushed out by the lower punch 6, the molded product P flowing toward the guide member 16 can be discharged even if the molded product P once contacts the tip end portion 1711 of the base 171 of the guide member 16. That is, an increase in the force applied from the base 171 of the guide member 16 to the molded product P becomes gentle.

If the intersection angle of the base 171 of the guide member 16 with respect to the rotation trajectory T of the die bore 4 of the die table 31 can be variably adjusted, the magnitude of the force applied to the molded product P immediately after the molded product P contacts the tip end portion 1711 of the base 171 of the guide member 16 can be finely adjusted. This is effective for lifting the compression molded product P gently from the die bore 4 and the punch tip 63 of the lower punch 6 to prevent the damage to the molded product P. The molded product P partially exposed on the die table 31 is prevented from being subjected to such a large shear force so as to cut the molded product P by the die bore 4 of the die table 31 and the tip end portion 1711 of the base 171 of the guide member 16.

If the position of the pick-up body 172 of the guide member 16 relative to the base 171 can be variably adjusted, the timing of picking up the molded product P flowing toward the guide member 16 can be finely adjusted. This is also effective for preventing the damage to the molded product P. The molded product P taken out of the die bore 4 is appropriately guided out of the rotational orbit T of the die bore 4 and the lower punch 6 so as not to collide with the punch tip of the upward-moving lower punch 6.

The invention is not limited to the embodiment detailed above. For example, the shape of the molded product P molded by the molding machine A is not limited to the substantially spherical shape.

Moreover, specific configurations of the respective portions can be modified in various manners within the scope of the invention defined by the claims.

## Claims

1. A rotary compression molding machine (A) in which die bores (4) penetrating a die table (31) of a turret (3) are provided, an upper punch (5) and a lower punch (6) are slidably held above and below each die bore (4), the turret (3) is horizontally rotated to fill the die bore (4) with a powdery material from a feeder (X) when the die bore (4) passes below the feeder (X), and a pair of the upper punch (5) and the lower punch (6) compresses the powdery material filled in the die bore (4) when the pair passes between an upper roll (12, 14) and a lower roll (13, 15) to mold and produce a molded product (P), the rotary compression molding machine (A) comprising:
a guide member (16) configured to scrape and guide the molded product (P) to a molded product chute (19), wherein
the guide member (16) has
a base (171) extending such that not a base end side close to the molded product chute (19) but a tip end side is away from the molded product chute (19) and intersecting with a rotation trajectory (T) of the die bore (4) of the die table (31), and
a pick-up body (172) supported by the base (171), including an inclined surface (1721) inclined with respect to an upper surface of the die table (31), and inserted from below onto the molded product (P) pushed out of the die bore (4) of the die table (31) by the lower punch (6).

2. The compression molding machine (A) according to claim 1, wherein the molded product (P) has a substantially spherical shape.

3. The compression molding machine (A) according to claim 1, wherein a portion (1711) of the base (171) of the guide member (16) on a tip end side of the pick-up body (172) comes into contact with the molded product (P) pushed out of the die bore (4) of the die table (31) by the lower punch (6) and not completely exposed upward from the upper surface of the die table (31), and then the pick-up body (172) comes into contact with the molded product (P).

4. The compression molding machine (A) according to claim 3, wherein a side edge of the portion (1711) of the base (171) of the guide member (16) on the tip end side of the pick-up body (172) has a non-linear shape bulging toward the die bore (4) from which the molded product (P) is about to be pushed out by the lower punch (6).

5. The compression molding machine (A) according to claim 1, 2, 3, or 4, wherein an intersection angle of the base (171) of the guide member (16) with respect to the rotation trajectory (T) of the die bore (4) of the die table (31) is variably adjustable.

6. The compression molding machine (A) according to claim 1, 2, 3, or 4, wherein a position of the pick-up body (172) of the guide member (16) relative to the base (171) is variably adjustable.
